# EUROPEAN PATENT SPECIFICATION

(11) **EP 2 605 659 B1**
(45) Date of publication and mention of the grant of the patent: **08.07.2020**
(21) Application number: 11817612.2
(22) Date of filing: 22.08.2011
(51) Int. Cl.: A01N 59/16, A01N 25/34, C23C 18/12, C01B 11/22, C01G 5/02, C09D 5/14

(54) **SILVER IODATE COMPOUNDS HAVING ANTIMICROBIAL PROPERTIES**
SILBERIODATVERBINDUNGEN MIT ANTIMIKROBIELLEN EIGENSCHAFTEN
COMPOSÉS D'IODATE D'ARGENT DOTÉS DE PROPRIÉTÉS ANTIMICROBIENNES

(30) Priority: 20.08.2010 US 375256 P
(43) Date of publication of application: 26.06.2013
(73) Proprietor: Innovotech Inc., Edmonton, Alberta T6N 1H1 (CA)
(72) Inventor: OLSON, Merle, E., Calgary, Alberta T3A 1N4 (CA); ANDERSON, Justin, J., Edmonton, Alberta T5T 3P9 (CA); OMAR, Amin, M., Edmonton, Alberta T6W 0J3 (CA); NADWORNY, Patricia, L., Sherwood Park, Alberta T8A 0P9 (CA)
(74) Representative: Tomkins & Co
(86) International application number: PCT/CA2011/000941
(87) International publication number: WO 2012/021979

(56) References cited:
- EP-A1- 2 512 251
- WO-A1-2007/147267
- WO-A1-2011/072392
- CN-A- 1 152 999
- US-A- 5 223 149
- US-A- 5 223 149
- US-A1- 2007 042 052
- JENSOVSKY L. ET AL.: 'Über die Darstellung und Eigenschaften von komplexen Argentaten (III)' ZEITSCHRIFT FUR ANORGANISCHE UND ALLGEMEINE CHEMIE vol. 312, October 1961, pages 26 - 31, XP055080562

## Description

### Field of the Invention

This invention relates to silver iodate compounds and their use in preventing or reducing microbial contamination. The compositions and methods are suitable for treating or preventing microbial contamination on any surface (i.e. surfaces used for production, handling, transport, storage, processing, or packaging).

This invention also relates to antimicrobial compositions and the use of these compositions with various devices, preferably devices such as medical devices, in which having an antimicrobial property is beneficial.

The invention also relates to articles produced or formed using the antimicrobial compositions of the present invention. For example, these compositions may be used in the making of or coating of articles, such as medical devices.

The invention also relates to coatings and/or ingredients in the manufacture of devices where having an antimicrobial property is beneficial, e.g., a medical device or an implant.

The invention also relates to methods of producing the silver iodate compounds and compositions.

### Background of the Invention

Silver is known for its antimicrobial use with medical devices, such as catheters, cannulae, and stents. One conventional approach for obtaining antimicrobial medical devices is the deposition of metallic silver directly onto the surface of the substrate, for example, by vapor coating, sputter coating, or ion beam coating. However, these noncontact deposition coating techniques suffer many drawbacks, including poor adhesion, lack of coating uniformity, and the need for special processing conditions, such as preparation in darkness due to the light sensitivity of some silver salts. One particular drawback of these coatings is that the processes by which the coatings are formed do not adequately coat hidden or enclosed areas, such as the interior lumen of a catheter or stent. Additionally, these methods produce coatings that are very much like metallic silver in that they do not release silver from the coating and require contact with the coating to provide antimicrobial action.

Though high concentrations of silver may be deposited on the substrate, very little free ionic silver is released on exposure to aqueous fluid. As a result, these coatings provide only limited antimicrobial activity. They essentially retard colonization of microbial agents on the surface of the device. However, because they do not release sufficient silver ions into aqueous fluids, they offer little or no protection from bacteria carried into the body upon application of the device and do not inhibit infection in the surrounding tissue.

Another method of coating silver onto a substrate involves deposition or electrodeposition of silver from solution. Drawbacks of these methods include poor adhesion, low silver pick-up on the substrate, the need for surface preparation, and high labor costs associated with multistep dipping operations usually required to produce the coatings. Adhesion problems have been addressed by inclusion of deposition agents and stabilizing agents, such as gold and platinum metals, or by forming chemical complexes between a silver compound and the substrate surface. However, inclusion of additional components increases the complexity and cost of producing such coatings.

With many medical devices, it is preferred to have a lubricious coating on the device. Lubricious coatings aid device insertion, reduce the trauma to tissue, and reduce the adherence of bacteria. Another drawback to conventional methods which apply silver and other metals directly onto the surface of a medical device for which a lubricious coating is also desired is that a second, lubricious coating must be applied to the device over the antimicrobial coating, adding to manufacturing cost and time.

Some of these coatings release, to varying degrees, silver ions into the solution or tissue surrounding the substrate. However, activation of such coatings often requires conditions that are not suitable for use with medical implants such as catheters, stents, and cannulae. These conditions include abrasion of the coating surface, heating to a temperature above 180°C, contact with hydrogen peroxide, and treatment with an electric current.

Therefore, there is a long felt need in the art to increase the antimicrobial properties of substrates, such as medical devices, increasing resistance to infection on the surface of the device or in tissue surrounding the device, or in both locations.

There is also a need in the art for compositions which can be incorporated into articles to provide antimicrobial activity. Further, there is a need for compositions which can be employed as coatings for articles that exhibit improved adhesion. There is also a need for compositions that overcome the solubility, settling, and agglomeration problems of conventional oligodynamic compositions, and exhibit enhanced, sustained release of oligodynamic agents. There is further a need for compositions that allow delivery of one or more active agents to locations.

In view of this, there is also a need for antimicrobial compositions that are stable, e.g., thermally stable, and are not inactivated in the environment of their intended use.

US patent number 5,223,149 discloses methods of limiting the growth of bacteria and algae in the water of swimming pools, industrial cooling towers, hot tubs and reservoirs which comprises adding to the water a stable trivalent silver compound.

### Summary of the Invention

According to the present invention there is provided a method of treating a microbial contaminant, exclusive of in vivo human or animal use, comprising contacting a microbe with one or more reaction products derived from a silver iodate or a silver periodate wherein the reaction product is pentasilver hexaoxoiodate Ag₅IO₆.

The invention also provides an article of manufacture comprising an antimicrobial compound or compounds comprising one or more reaction products derived from a silver iodate or a silver periodate wherein the reaction product is pentasilver hexaoxoiodate (Ag₅IO₆).

The compositions of the present invention have applicability in a wide variety of agricultural, industrial, and medical environments, e.g., disinfecting any surface, particularly disinfecting work or processing surfaces (e.g., tables); in antimicrobial coatings; in medical devices and implants, particularly where having an antimicrobial property or characteristic would be beneficial; and in treating human, plant, and animal diseases and conditions.

The compositions and methods of the present invention may also be effective in treating and/or eradicating biofilm.

### Detailed Description of the Invention

The present invention involves silver iodate compounds and their use as antimicrobial agents. Some embodiments of the invention include one or more silver iodate compounds as an active agent imparting an antimicrobial property or properties.

Some embodiments of the invention include using a diperiodatoargentate as the starting material and forming one or more reaction products of the diperiodatoargentates, and then using those reaction products as an antimicrobial active agent. Exemplary diperiodatoargentates include but are not limited to sodium diperiodatoargentate (III) or potassium diperiodatoargentate (III).

Some embodiments of the invention include one or more diperiodatoargentate reaction products that form in an aqueous solution. In preferred embodiments, the reaction products are formed in a hydrothermal reaction.

Any of the active agents of the present invention may be used to impart antimicrobial properties to a substrate. For example, one or more active agents may be incorporated into the structure of substrate or as a coating or the like. Exemplary substrates include metals and medical devices.

Some embodiments of the present invention also include pharmaceutically acceptable salts, or solvates and hydrates, and compositions and formulations of silver iodate compounds, silver iodate reaction products, and active agents produced from a starting material of the present invention (e.g. sodium diperiodatoargentate (III) or potassium diperiodatoargentate (III)).

The present invention also includes unique methods of producing the antimicrobial active agents of the present invention.

The present invention also includes methods of producing the antimicrobial agents of the present invention, e.g., Ag₅IO₆, using, for example, the methods shown in the references cited in Example 9.

The present invention also includes methods of coating a metal substrate with an active agent of the present invention, said methods resulting in imparting an antimicrobial characteristic to the substrate. As used herein, metal substrate includes but is not limited to a wide variety of metals (e.g., titanium and stainless steel); metal alloys; and devices or products made using these metals (e.g., medical devices, needles, ports, implants, pins, etc.).

The starting compound may be sodium or potassium diperiodatoargentate, and the embodiments include, but are not limited to, their reaction products. Reaction products include, but are not limited to, pentasilver hexaoxoiodate; Ag₅IO₆. silver orthoperiodate; silver periodate (VII); silver iodate (VII); or (Ag₂O)₅•I₂O₇.

The compositions and methods may also include one or more other active agents. One or more silver iodate compounds may be used to produce an article having improved antimicrobial characteristics. The silver iodate compound may be a coating or the like on a surface of the article, or may be incorporated into a material that forms the article. The article may comprise titanium or stainless steel. The article may be a medical device, such as a catheter or needle. Some embodiments of the invention include forming an article including an active agent of the present invention, thereby forming an article having one or more antimicrobial properties. Some embodiments of the invention include a coating, layer, or the like on an article, said coating, etc., comprising one or more active agents of the present invention (including but not limited to silver iodate compounds, reaction products of sodium or potassium diperiodatoargentate, or pentasilver hexaoxoiodate), and imparting improved antimicrobial characteristics to the article or a portion of the article.

A composition containing the active agent (e.g., reaction products of sodium or potassium diperiodatoargentate, such as pentasilver hexaoxoiodate) may be the medical device itself. In these embodiments, the composition may be any form that does not inactivate the silver, including but not limited to a gel, ointment, cream, or ingredient in a polymer or carrier.

Some embodiments of the invention include incorporating one or more active agents of the present invention, e.g., a silver iodate compound, or reaction products of sodium or potassium diperiodatoargentate such as pentasilver hexaoxoiodate, into or on the medical device. In these embodiments of the invention, the silver composition may be any form that does not inactivate the silver, including but not limited to a gel, ointment, or cream.

In some embodiments of the invention, the active agent or a composition containing the active agent may be any form that does not inactivate the silver, including but not limited to a layer, or ingredient in a metal, or a carrier.

In some embodiments of the invention, the articles are used for treating a microbial contaminant using an antimicrobial agent comprising silver ions or silver-containing complexes. The articles may also include one or more other active agents. The articles and methods are antimicrobial, e.g. against biofilm, similar structures, or precursors formed by bacteria, fungi, viruses, algae, parasites, yeast, and other microbes. A microbial contaminant or infection may be found in a variety of species, including but not limited to humans, pigs, ruminants, horses, dogs, cats, and poultry.

In some embodiments of the invention, the silver articles and methods are used to manufacture or impart antimicrobial characteristics to an article, such as a medical device, an implant, or the like.

In some embodiments of the invention, the active agent(s) may be incorporated into or onto packaging for an article, such as a medical device or a needle.

The silver compositions may be used with or incorporated into an article where antimicrobial properties are desirable and/or beneficial. Examples include, but are not limited to, medical and surgical devices and/or environments, such as implants. Other examples are provided below.

The silver compositions may be used to coat, or may be incorporated into, any article comprising a metal or metal alloy. Typical metals and alloys include, but are not limited to titanium, titanium containing alloys, aluminum, stainless steel, mild steel, and copper. In preferred embodiments of the invention, the metal is titanium (grade 2), titanium (grade 5), aluminum, stainless steel, stainless steel needles, titanium (grade 5) pins, and other titanium (grade 5) implants.

The composition optionally contains additional antimicrobial metals or salts of these antimicrobial metals, such as zinc, gold, copper, cerium, and the like. In yet another embodiment, the composition optionally comprises additional noble metals or salts of one or more noble metals to promote galvanic action. The composition optionally comprises additional platinum group metals or salts of platinum group metals such as platinum, palladium, rhodium, iridium, ruthenium, osmium, and the like.

The compositions optionally contain other components that provide beneficial properties to the composition, that improve the antimicrobial effectiveness of the composition, or that otherwise serve as active agents to impart additional properties to the composition. The compositions are also used to inhibit algal, fungal, mollusk, or microbial growth on surfaces. The compositions of the invention are also used as herbicides, insecticides, antifogging agents, diagnostic agents, screening agents, and antifoulants.

In some embodiments, the present invention relates to an article of manufacture which comprises the antimicrobial compositions of the present invention. In one embodiment, the composition is used to form an article or a portion of the article, for example by molding, casting, extruding, etc. Thus, at least part of the formed article is composed of one or more of the compositions of the present invention, alone or in admixture with other components. In another disclosed embodiment, the composition is applied to a preformed article or part of an article as a coating. The coated article may be produced, for example, by dipping the article into the composition or by spraying the article with the composition and then drying the coated article. In a preferred embodiment, the compositions are used to coat medical devices by reaction of one silver iodate (e.g. sodium diperiodatoargentate or potassium diperiodatoargentate) to form another (e.g. pentasilver hexaoxoiodate) in the presence of the device to be coated.

Also provided are compositions that provide antimicrobial, antibacterial, antiviral, antifungal, or antibiotic activity, or some combination thereof.

Also provided are compositions that reduce encrustation, inhibit coagulation, improve healing, inhibit restenosis, or impart antiviral, antifungal, antithrombogenic, or other properties to coated substrates.

Also provided are compositions that inhibit the growth of algae, mollusks, bacteria, bioslime, or some combination thereof on surfaces.

As described in more detail below, the methods and articles of the present invention may be used wherever biofilm or similar structures may be found, including but not limited to microorganisms growing and/or floating in liquid environments. The antimicrobial or anti-biofilm effect may be biostatic or biocidal.

In some embodiments of the invention, the articles and methods may be used to treat or prevent one or more biofilms. In some embodiments of the invention, the articles may be used to treat and/or prevent one or more human, animal, or plant diseases, conditions, infections, or contaminations. Typically these diseases and infections, etc., are caused by microbes associated with or residing in the biofilm.

The present invention includes any method of contacting with an antimicrobial agent of the present invention. Typical mechanisms of contacting include, but are not limited to, coating, spraying, immersing, wiping, and diffusing in liquid, powder, or other delivery forms (e.g., injection, tablets, washing, vacuum, or oral). In some embodiments of the invention, the compositions and methods may include applying the anti-biofilm agent to any portion of an article or an ingredient of an article. Further, any structure or hard surface (e.g., tools or machinery surfaces associated with harvesting, transport, handling, packaging, or processing) can be sanitized, disinfected, impregnated, or coated with the anti-biofilm agent of the present invention.

This invention demonstrates that stable, slow release silver-containing compounds can be used as antimicrobials against bacterial and fungal pathogens, including biofilms growing on a substrate, particularly a metal substrate.

Compositions of the present invention include any silver containing compound produced using a diperiodatoargentate as the starting material. Typical starting materials include but are not limited to sodium diperiodatoargentate(III) or potassium diperiodatoargentate(III).

These compositions exhibit antimicrobial activity and/or anti-biofilm activity against a variety of microbes, including both bacteria and fungi, and provide a sustained release of silver ions or silver containing complexes from silver compounds.

The term "oxidized silver species" as used herein may involve but is not limited to compounds of silver where said silver is in +I, +II or +III valent states or any combinations thereof. The composition may also include elemental silver, preferably in small amounts, as a by-product of the oxidation or production process.

The preferred composition of the present invention comprises an active agent that results in an ionic silver species or silver-containing complex. These active silver species may include at least one form of soluble silver ion selected from the group consisting of Ag⁺, Ag⁺⁺, and Ag⁺⁺⁺.

Silver complexes or compounds, as used herein, refers to a composition containing silver having a valent state of one or higher, such as, for example Ag(I), Ag(II), and Ag(III) valent states. The compositions and methods of the invention may be comprised of silver ions, complexes, or compounds having more than one valent state so that the oxidized silver species may be comprised of a multivalent substance. Finally, it is believed that the compositions of the present invention may be comprised of a silver-containing substance or a plurality of silver containing substances that may react over time to form other silver containing substances which may exhibit differing antimicrobial properties.

In preferred embodiments of the invention, antimicrobial properties may be achieved by contacting an antimicrobially active silver species or high valency silver ion within or at the surface of a substrate, or diffusing from the surface of a substrate into an aqueous environment.

In the preferred embodiments, the starting compounds used to form the silver iodates may be produced by providing an aqueous solution of a monovalent silver salt or a silver complex such as silver nitrate, silver perchlorate, or a silver diamino complex. Silver nitrate is more preferable if the reaction is carried out under acidic conditions or at close to neutral conditions (i.e. at pH below 7). A silver diamino complex, (i.e., [Ag(NH₃)²]⁺) is more preferable if the reaction is carried out under alkaline conditions (i.e. at pH above 7). In preferred embodiments, the oxidizing agent is potassium persulfate (KPS).

The starting agent may then undergo further hydrothermal reactions to form silver iodate compounds, such as pentasilver hexaoxoiodate. The reaction products of the present invention are typically formed in an aqueous solution and after heating the solution. While not intending to limit the invention to a particular temperature or temperature range, the reaction products of the present invention may be formed by heating the solution up to about 150°C, e.g., in a range from about room temperature to about 150°C, preferably in a range from about 70°C to about 120°C. One skilled in the art will recognize that other factors, such as pressure, may affect the reaction, and may affect the choice of a particular temperature. For example, the examples show that the reaction products of the present invention may be formed at 80°C under ambient conditions or may be formed at 120°C under pressure (e.g., in an autoclave).

As shown in Example 14, the invention also includes a novel process for forming one or more reaction products using a diperiodatoargentate as the starting material, where the reaction product(s) is/are powders.

The silver compounds may be used in any of the following formats: silver deposition coatings, liquid, suspension, powder, capsule, tablet, coating, and similar configurations. In a preferred embodiment of the present invention, active agents are incorporated directly onto a material, or may be incorporated by sequentially adding components or precursors of the active agent to the material, and having the precursors of the active agent in or on the coating. Other forms also include films, sheets, fibers, sprays, and gels.

Examples of additional antimicrobial agents that may be used in the present invention include, but are not limited to: 8-hydroxyquinoline sulfate, 8-hydroxyquinoline citrate, aluminum sulfate, quaternary ammonium, isoniazid, ethambutol, pyrazinamide, streptomycin, clofazimine, rifabutin, fluoroquinolones, ofloxacin, sparfloxacin, rifampin, azithromycin, clarithromycin, dapsone, tetracycline, erythromycin, ciprofloxacin, doxycycline, ampicillin, amphotericin B, ketoconazole, fluconazole, pyrimethamine, sulfadiazine, clindamycin, lincomycin, pentamidine, atovaquone, paromomycin, diclazuril, acyclovir, trifluorouridine, foscarnet, penicillin, gentamicin, ganciclovir, iatroconazole, miconazole, Zn-pyrithione, and heavy metals including, but not limited to, gold, platinum, silver, zinc, and copper, and their combined forms including salts, such as chloride, bromide, iodide, nitrate, sulphate, and periodate, complexes with carriers, and other forms.

Multiple inactive ingredients may be optionally incorporated in the formulations. Examples of such ingredients are emulsifiers, thickening agents, solvents, antifoaming agents, preservatives, fragrances, coloring agents, emollients, fillers, and the like.

The compositions and methods of the present invention may be used to treat biofilm in a wide range of environments and places. Treating biofilm, as used herein, refers to contacting a biofilm or similar structure with an anti-biofilm agent wherever biofilm may be found, is expected to be found, or is postulated to be found. One skilled in the art will readily recognize that the areas and industries for which the present invention is applicable include a vast number of processes, products, and places. The active agent(s) incorporated into the matrices and devices of the present invention may be used for a variety of applications where there is a need for or benefit from the presence of the active agent.

In this aspect of the invention, the compositions and methods are suitable for treating against one or more microbial infections, including but not limited to diseases or conditions caused by *Pseudomonas aeruginosa, Staphylococcus aureus, Staphylococcus epidermidis, Escherichia coli, Streptococcus* spp., *Pseudomonads, Xanthomonads, Curtobacterium* species, *Sclerotinia* species, *Pythium* species, *Fusarium* species, *Botrytis cinerea, Helminthosporium solani, Streptomyces* species, *Phytophthora* species, *Rhizoctonia solani, Erwinia* species, and *Clavibacter* species, to name just a few.

The compositions and methods of the present invention are also effective or beneficial in decontaminating, disinfecting, or protecting a wide assortment of surfaces. Exemplary surfaces include, but are not limited to agricultural surfaces, e.g., greenhouses, irrigation systems, storage facilities, crates and bins; agricultural tools and equipment, including production equipment involved in harvesting, seeding, pruning, tillage and processing/handling equipment, such as conveyor belts, pickers, and cutters; food processing plants, centers, or equipment, including dairy plants, poultry plants, slaughter houses, seafood processing plants, fresh produce processing centers, and beverage processing centers.

The compositions and methods of the present invention are also effective or beneficial as protective coatings and/or as ingredients in a protective coating. Exemplary areas include but are not limited to building, environmental, medical, dental, and industrial areas. Exemplary surfaces include but are not limited to surfaces in hospitals, greenhouses, agricultural storage facilities, water systems, ships (e.g., biocorrosion), cables (e.g., biocorrosion), and pipelines (e.g., biocorrosion); and coatings themselves, e.g., paint, stain, and grout; medical devices, e.g., catheters and dialysis machines, or parts thereof; and dental implants and coatings.

The compositions and methods of the present invention are also effective, or expected to be effective, as a preservative for plant-based cosmetics, including but not limited to, an ingredient of a cosmetic, or incorporation into the packaging of a cosmetic.

The compositions may be used to coat substrate materials. Thus, another aspect of the invention is a coating containing the composition of the invention. These coatings may comprise either a single layer or multiple layers. The compositions of the present invention are used alone or in combination with polymer coatings to provide advantageous properties to the surface of the substrate. These compositions are used, for example, to deliver pharmaceutical agents that, for example, prevent infection, reduce encrustation, inhibit coagulation, improve healing, inhibit restenosis, or impart antiviral, antifungal, antithrombogenic, or other properties to coated substrates.

One skilled in the art will recognize that the silver species of the present invention may be incorporated into an article, medical device, implant, or the like. As used herein, incorporating refers to using an ionic silver species, such as sodium diperiodatoargentate, potassium diperiodatoargentate, or a reaction product such as pentasilver hexaoxoiodate, in the manufacture of the article, as a coating or layer of the article, or as a lubricant or the like when using the article.

The compounds of the present invention and/or their reaction products may be incorporated into any metal article, e.g., a metallic medical device, including but not limited to various grades of titanium, titanium alloys, stainless steel, mild steel, aluminum, copper, etc.

The compounds of the present invention and/or their reaction products may be incorporated into any gel, ointment, or cream.

### Definitions

The following definitions are used in reference to the invention:
As used herein, active agent describes a silver-containing chemical substance, compound, or complex which exhibits antimicrobial activity. Active agent includes but is not limited to a silver iodate; one or more reaction products of a sodium diperiodatoargentate; one or more reaction products of a potassium diperiodatoargentate; pentasilver hexaoxoiodate; Ag₅IO₆. silver orthoperiodate; silver periodate (VII); silver iodate (VII); or (Ag₂O)₅·I₂O₇. All of the starting materials of the present invention react to form at least one compound or complex that releases silver having a valence of 0, 1, 2, 3, or higher. As evident to one skilled in the art, the typical active agents of the present invention are Ag (I) combined with a higher oxidation state iodine.

Reaction product, as used herein, refers to any silver containing compound or complex formed in a chemical reaction in which a diperiodatoargentate is the starting compound. Exemplary reaction products include but are not limited to pentasilver hexaoxoiodate Ag₅IO₆. silver orthoperiodate; silver periodate (VII); silver iodate (VII); or (Ag₂O)₅•I₂O₇.

One skilled in the art will recognize that a biofilm may be composed of a single species or may be multi-species, may be homogenous, heterogeneous, and/or may also include other organisms associated with or protected by the biofilm. Biofilm as used herein also refers to one or more stages of biofilm development or formation. As used herein, anti-biofilm agent refers to any element, chemical, biochemical, or the like that is effective against a biofilm. Typical anti-biofilm agents are those that have antimicrobial, anti-bacterial, anti-fungal or anti-algal properties. Metal and metal compounds, preferably ionic silver-containing species, have been shown generally to have anti-bacterial and ethylene inhibiting properties, and are preferred anti-biofilm agents in accordance with the present invention. In some embodiments of the invention, the anti-biofilm agent is a broad spectrum agent, e.g., having effectiveness or activity against more than one microbial species.

"Incorporating" as used herein refers to any process or composition involving at least one silver compound that results in the ionic silver being biologically and/or medically available as an antimicrobial agent. In preferred embodiments of the invention, the ionic silver is not inactivated, or is not inactivated to a degree which renders it unable to act as an antimicrobial agent. Typically, the ionic silver will be incorporated into or on a medical device during manufacture of the device or a portion thereof; by coating or layering the device or a portion thereof with the ionic silver; or by using ionic silver in conjunction with or as an aid to the function, use, or insertion of the medical device, e.g., a lubricant or disinfectant.

"Sustained release" or "sustainable basis" are used to define release of atoms, molecules, ions, or clusters of a noble metal that continues over time measured in hours or days, and thus distinguishes release of such metal species from the bulk metal, which release such species at a rate and concentration which is too low to be effective, and from highly soluble salts of noble metals such as silver nitrate, which releases silver ions virtually instantly, but not continuously, in contact with an alcohol, aqueous solution, or electrolyte. The reaction products of the present invention are superior to other commercially available silver containing compounds in part because of the slower release of silver.

Planktonic: Microorganisms growing as floating single cells, which is part of their life cycle.

Medical device as used herein refers to any device, tool, instrument implant, or the like, relating to medicine or the practice of medicine, or intended for use to heal or treat a disease or condition. A medical device of the present invention may be used for the medical benefit of a human or animal. Exemplary medical devices include, but are not limited to, catheters; cannulae; needles; stents; guide wires; implant devices; filters; stents of any size, shape, or placement; coils of any size, shape, or placement; contact lenses; IUDs; peristaltic pump chambers; endotracheal tubes; gastroenteric feeding tubes; arteriovenous shunts; condoms; oxygenator and kidney membranes; gloves; pacemaker leads; wound dressings; metallic pins, plates, and screws; metallic artificial hips; artificial knees; and gels, creams, and ointments.

A medical device of the present invention may be formed in whole or in part of any substance that is suitable for use with a human or animal, including but not limited to any metal or metal alloy, including but not limited to titanium, stainless steel, copper, aluminum, combinations thereof, or the like.

Surface contamination, as used herein, refers to microorganisms growing on or relocated to a surface. The microorganisms associated with surface contamination may be actively growing or dormant, but represent a viable inoculum that can reinitiate infection, disease or other undesirable conditions.

Antimicrobial activity is art-recognized and may be biostatic and/or biocidal. Biostatic materials are materials that inhibit the growth of all or some of the microorganism; and a biocide is a material that kills all or some of the microorganism. The active agents of the present invention are sufficiently soluble to provide biostatic and/or biocidal activity.

The term "coating" as used herein generally includes coatings that completely cover a surface, or portion thereof, as well as coatings that may only partially cover a surface, such as those coatings that after drying leave gaps in coverage on a surface. The latter category of coatings may include, but are not limited to a network of covered and uncovered portions (e.g., non-continuous covered regions of the surface). When the coatings described herein are described as being applied to a surface, it is understood that the coatings need not be applied to, or that they need not cover, the entire surface. For instance, the coatings will be considered as being applied to a surface even if they are only applied to modify a portion of the surface. The coating may be applied to a surface or impregnated within the material used to construct an item or a portion of an item.

The term "substrate" as used herein generally refers to a body or base layer or material (e.g., onto which other layers are deposited).

### EXAMPLES

The following is a process for producing sodium diperiodatoargentate, a possible starting material used to form the reaction products of the present invention (shown in more detail in the numbered examples):
**Materials:** silver nitrate, 5.8g; potassium persulfate, 60g; potassium iodate, 16g; potassium hydroxide, 50g; sodium hydroxide, 250g.
**Process:** The KOH was added to 2500 mL ddH₂O. The solution was heated to approximately 60°C. The KIO₄ and K₂S₂O₈ were dissolved into the solution, and heated until the temperature reached 80°C, while stirring at maximal speed with an overhead stirrer (∼1800 rpm). The solution was kept at a constant temperature of 80°C for a sufficient period of time to ensure that the entire solution and the container were at the correct temperature.

In a separate flask, the AgNO₃ was dissolved in 1500 mL ddH₂O and heated to 40°C. The AgNO₃ solution was added to the persulfate/periodate solution at a rate of 9.9 mL/min using a peristaltic pump system. At this addition rate, the stirring rate was controlled so that the stirring was slow while a low volume of solution was present. As the volume of the solution increased, the stirring was increased as well to ensure good contact between the AgNO₃ and the contents of the flask. Faster stirring prevented side reactions.

A 2.5" Teflon coated overhead stirrer was used, maintaining the vortex approximately 1" above the stirrer; with speeds corresponding, approximately, to about 800 rpm at the start of the addition and about 1800 rpm at the end (by the time 600 mL was remaining in the AgNO₃ flask).

Once the addition was complete, the solution was removed from the hotplate and allowed to cool to room temperature. The solution was then filtered using a glass crucible (medium porosity filter) to remove any solid impurities (impurities were typically not observed at this step, but there was a possibility of AgO or other impurity formation).

The NaOH (250 mg) was then added to the filtered solution, and the solution was cooled to a minimum of 40°C. The cooled solution was then filtered using a glass crucible (medium porosity filter), resulting in a filter cake.

The filter cake was then slurry washed two times with 25 mL ddH₂O. Some compound was seen going through the filter at the end of the second wash. The solid was then transferred to a 2L beaker, 550 mL ddH₂O or less was added, and the solution was heated to 80°C. A hot filtration was then performed at 80°C, filtering at ½ speed on the filter pump, with this filtration step being completed within about 1 minute ± 15 seconds.

The hot filtration step resulted in a solid that was left at room temperature for 1 hour, and then placed in an ice-water bath for up to 2 hours. This caused the solid to recrystallize.

Once the sample had fully recrystallized, it was filtered using a glass crucible (medium porosity filter), and washed three times with 12 mL ddH₂O. The sample was then spread into a thin layer and allowed to dry overnight (e.g. in a fume hood at room temperature).

At this stage, the result is a high-yield of Na₅H₂Ag(IO₆)₂·xH₂O, with K₅H₂Ag(IO₆)₂·8H₂O as a possible impurity.

This resulting sodium diperiodatoargentate (III) was used as a starting compound for the examples shown below, and is a starting material from which the reaction products of the present invention can be formed.

### Example 1. Coating Grade 2 Titanium with Ag₅IO₆ during reaction to make sodium diperiodatoargentate.

Titanium (Ti) cords were coated with pentasilver hexaoxoiodate by placing them in the vessel while the above reaction was performed, as described briefly below:
1. 250 mL ddH₂O was heated to 50°C.
2. Ti cords were washed in ddH₂O.
3. While stirring at a medium rate, 5.0 g KOH was dissolved in solution, followed by 6.0g of K₂S₂O₈ (ensuring all had dissolved), followed by 1.6 g of KIO₄.
4. Ti cords were added to the solution.
5. The solution was heated to 80°C.
6. The stirring rate was increased to a high rate.
7. In a separate flask, AgNO₃ was dissolved in 150 mL of ddH₂O and heated to 60°C.
8. This AgNO₃ solution was added to the persulfate/periodate solution at a rate of 0.3 mL/min.
9. Any color changes, gas or solid formation was recorded.
10. The solution was removed from the hot plate once all the AgNO₃ was added.
11. The solution was allowed to cool and was then filtered to collect the coated Ti cords for further studies.
12. The Ti cords were rinsed with dH₂O.

### Example 2. Other hydrothermal methods for coating Grade 2 Ti.

Various hydrothermal reaction methods have been developed with the starting component being sodium diperiodatoargentate in distilled water, which was reacted to coat Grade 2 (commercially pure) titanium with Ag₅IO₆:
1) Titanium cord was placed in the reaction vessel during the formation of sodium diperiodatoargentate (reaction time approximately 3 hours - see Example 1 for details).
2) Titanium cord was placed in a concentrated solution (e.g. 5000 ppm) of sodium diperiodatoargentate, which was then heated at 80°C in an open vessel for 3 hours.
3) Titanium cord was placed in a concentrated solution (e.g. 5000 ppm) of sodium diperiodatoargentate, which was then autoclaved using a liquid cycle (temperature = 121°C, pressure = 15 psig, 20 minutes).

### Example 3. Bacteriostatic activity of coated Grade 2 Ti.

Titanium (Ti) cords coated using all three methods shown in Example 2 were tested for bacteriostatic longevity using day-to-day transfer corrected zone of inhibition (CZOI) assays. The Ti cords were pressed into agar on which a lawn of *Pseudomonas aeruginosa* had been spread and after incubation overnight, the zone of inhibition created was measured in perpendicular directions and the Ti cords were transferred to fresh agar plates for another challenge. This was repeated until the Ti cords no longer generated any zones of inhibition.

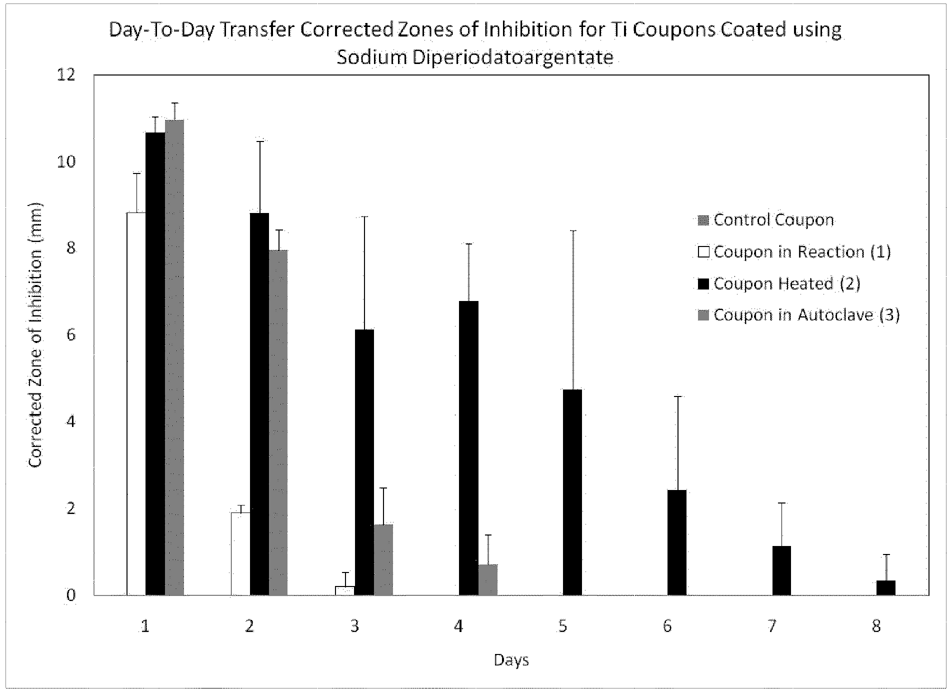

These data show that the longevity of method (1) was 3 days, the longevity of method (2) was 8 days, and the longevity of method (3) was 4 days, indicating that the method of heating at 80°C for 3h was likely the most effective coating method in terms of biological activity. The uncoated Ti cords did not generate any zone of inhibition, even on the first day.

### Example 4. Atomic Absorption Spectroscopy (AAS) - Silver content on the surface of coated Grade 2 Ti.

Silver was dissolved from coated Ti cords using a nitric acid solution, which was then submitted for atomic absorption spectroscopy to determine the quantity of silver coating the Ti cords. The AAS indicated that about 30 µg Ag/cm² coated the samples of all three methods. This method did include removal of silver from the coated cut ends of the cords, which may have damped differences between coating methods, since the roughly cut ends likely have more nucleation sites than the smoother sides of the cords.

### Example 5. UV-Vis Spectrophotometry (UV-Vis) - spectra from coated Grade 2 Ti.

Silver-coated Ti cords were soaked in distilled water for 4, 7, and 72 hours and the resulting solutions were analyzed via UV-Vis spectrophotometry for absorbance at wavelengths between 200-500 nm. No peaks were observed at any of the times measured, suggesting that the silver compound coating the Ti is relatively tightly bound to the Ti cords, the compound is a relatively low solubility compound, or the compound does not have a peak in the range measured when it is dissolved, indicating that the Ti cords were not coated with sodium diperiodatoargentate itself (which has multiple absorbance peaks in this range), but rather a reaction product.

### Example 6. Scanning Electron Microscopy (SEM) - Imaging and element mapping on the surface of coated Grade 2 Ti.

Silver-coated Ti cords and uncoated Ti cords imaged via SEM showed that Methods (2) and (3) had a number of small flakes as well as some larger crystals coated on the Ti surface, while Method (1) appeared mostly to have large crystals deposited on the Ti surface.

Energy Dispersive X-ray Spectroscopy (EDS) analysis showed that silver, iodine, and oxygen all mapped to the same locations at the crystals deposited at the Ti surfaces, indicating that the deposited compounds contained all three elements.

### Example 7. X-ray Diffraction (XRD) to quantitatively identify silver species coated onto Grade 2 Ti.

X-ray Diffraction (XRD) analysis indicated that the silver compound coated onto the Ti was not sodium diperiodatoargentate, but a reaction product (as suggested by the above data) - Ag₅IO₆. This compound has also been called pentasilver hexaoxoiodate, silver orthoperiodate, silver periodate(VII), silver iodate(VII), or (Ag₂O)₅•I₂O₇. No other silver compounds were detected. The x-ray diffraction method suggested that there were low silver levels deposited using Methods (2) and (3) - ∼0.3-1 %, with more silver deposited using Method (1) - ∼10%. However, this may be related to the locations analyzed, since the SEMs suggest the coatings are discontinuous.

### Example 8. X-ray Photoelectron Spectroscopy (XPS) - Surface analysis of coated Grade 2 Ti.

X-ray photoelectron spectroscopy (XPS) elemental analysis indicates that silver, iodine, and oxygen are all present at the sample surface, as was observed with the EDS mapping. The XPS elemental analysis indicated that Method (1) had low quantities of silver present on the surface (∼0.1%), while methods (2) and (3) had similar quantities (-4-5%). This again may be related to the locations analyzed, since the SEMs indicate the coatings are discontinuous. Analysis of the high-resolution spectra generated via XPS for oxidation state analysis suggests that the oxidation states of the silver for all three methods is the same, but that more of the iodine is present at a high oxidation state - as part of Ag₅IO₆ - with Method (2) relative to Methods (1) and (3).

### Example 9. Properties of Ag₅IO₆.

All three methods for coating Ti resulted in the deposition of Ag₅IO₆ on the Ti surface, with resultant bacteriostatic activity. The published literature (see reference list) indicates that Ag₅IO₆ is a coarse shiny black crystal, which is insensitive to light and air. All the silver atoms in this compound are silver (I) - i.e. Ag⁺. The compound is a diamagnetic semiconductor. To the knowledge of the inventors, Ag₅IO₆ has only been used in the context of developing new electrochemical cells, and its antimicrobial properties have not been previously investigated in the published literature.

As a variety of hydrothermal reaction methods have been used to generate this coating, it seems likely that a wide range of temperature/pressure/concentration conditions could generate similar results. Results of hydrolysis (stability) testing with sodium diperiodatoargentate suggest that silver periodates may be formed during reaction of sodium diperiodatoargentate with water, even at low temperatures (e.g. 4°C-44°C), although the reaction is much slower. Sodium diperiodatoargentate may also react in the presence of some hydrogels to form silver periodates such as Ag₅IO₆.

Potassium diperiodatoargentate may produce similar results to those seen in the above examples, which may allow for better (i.e. more continuous/consistent) coating due to the higher concentration of silver in solution that can be generated using potassium diperiodatoargentate.

Based on the literature (see reference list), as well as observations during hydrolysis studies and the examples below, the Ti surface is not necessary for the generation of the Ag₅IO₆ under these conditions, suggesting that the same methodology could be used to coat a variety of other surfaces used in medical applications. It may also be possible to coat other surfaces such as wood, glass, plastic, and textiles.

### References

(1) Kovalevskiy, A., and Jansen, M. Synthesis, Crystal Structure Determination, and Physical Properties of Ag5IO6. Z Anorg Allg Chem 2006;632:577-581.
(2) Cignini, P., Icovi, M., Panero, S., and Pistoia, G. On the possibility of using silver salts other than Ag2CrO4 in organic lithium cells. J Power Source 1978; 3:347-357.
(3) Chapter 9. Oxysalts of Iodine. In: High Temperature Properties and Thermal Decomposition of Inorganic Salts. ©2001, CRC Press LLC.
(4) Mackay, Mackay, and Henderson. Introduction to modern inorganic chemistry, pg. 489. Viewed on July 19, 2010 at: http://books.google.ca/books?id=STxHXRR4VKIC&pg=PA489&lpg=PA489&d q=Ag5IO6&source=bl&ots=EE2zLL53TZ&sig=myYoLJRyLS7DJc7a1OlacrOO 83w&hl=en&ei=VLJETOucIJO6sQPTto2TDQ&sa=X&oi=book_result&ct=resul t&resnum=6&ved=0CCMQ6AEwBQ#v=onepage&q=Ag5IO6&f=false.
(5) Gyani, P. Periodic Acid and Periodates. II The system silver oxide-periodic acid-water at 35°C. J Phys Chem 1951;55(7):1111-1119.

### Example 10. Coating other metals

Aluminum, copper, mild steel, stainless steel, stainless steel needles, and Ti-6AI-4V implant cylinders (Grade 5 Ti) were coated using Method 2 from Example 2, chosen because of the strong bacteriostatic activity generated in Example 3 when coating Grade 2 Ti. Visible dark coating was observed on the Cu, mild steel, and Al, but only minor changes were observed on the Grade 5 Ti and the stainless steel.

UV-Vis was performed as described in Example 5. None of the samples showed spectra with characteristic peaks for sodium diperiodatoargentate, indicating that the surfaces were not coated with the starting material. The spectra varied from metal to metal, even when corrected for control metals soaked for the same period of time, suggesting that depending on the surface being coated, different compounds may have been coated on to the surface due to reactions with the surface. The spectra for Al was the strongest.

AAS was performed as described in Example 4. The stainless steel had about 16 µg/cm² Ag, the copper had about 19 µg/cm², the aluminum had about 557 µg/cm², the mild steel had about 152 µg/cm², the Ti-6AI-4V had about 5 µg/cm², the stainless steel needles (whole) had about 85 µg/needle, and the stainless steel needles (tip only) had about 31 µg/needle tip. Thus, the metal being coated and/or its surface roughness significantly impacted the amount of silver that was coated onto it under the particular conditions described.

CZOI testing was performed as described in Example 3. None of the controls produced any zones of inhibition, with the possible exception of a very weak zone from the stainless steel needle tips on the first day only. The silver-coated Al showed bacteriostatic activity for 6 days, the silver coated stainless steel needles (whole and tips) and coupons showed bacteriostatic activity for 2 days. The silver coated Grade 5 Ti and copper demonstrated bacteriostatic activity for only one day. The mild steel showed no bacteriostatic activity at all. Despite the stainless steel having less silver coated on it, it performed better than the mild steel or copper. This suggests that a different compound may be coated on to the mild steel and copper, or that it is so well bound that it isn't released from the surface, and therefore a zone of inhibition is not generated. The poor activity of the Ti-6AI-4V compared, particularly, to the Grade 2 Ti (Example 3), was likely due to the low quantity of silver coated onto it, which may in turn be related to surface roughness. The strong antimicrobial activity of the Al was likely due to the large quantity of silver deposited on the surface in a form that allowed it to be released over time, but could be due as well to the deposition of more than one species.

### Example 11. Coating of Grade 5 Ti (Ti-6AI-4V)

Example 2, Method 2 was used to coat Grade 5 Ti to ensure that similar results could be obtained for different Ti grades.

UV-Vis was performed as in Example 5. Characteristic peaks for sodium diperiodatoargentate were not observed on the coated Grade 5 Ti, confirming that the starting compound was not coated on to the metal. As with the Grade 2 Ti, no peaks were observed above 300 nm.

AAS was performed as in Example 4. The Grade 5 Ti cylinders had about 5 µg/cm² Ag. This was 5 times lower than the amount coated onto the Grade 2 Ti, likely due to differences in surface roughness, although the fact that the Grade 5 Ti is an alloy (6% Al, 4% V) may have had an impact as well.

CZOI testing was performed as in Example 3. Unlike the Grade 2 Ti, the Grade 5 Ti only generated bacteriostatic activity for 1 day. This is likely related to the much lower silver coating thickness.

XRD was performed as in Example 7. Due to the coating thickness, the silver could not be measured. This type of test was repeated with a thicker coating (see Example 12), and Ag₅IO₆ was detected, as was the case with Grade 2 Ti in Example 2.

SEM/EDS were performed as in Example 6. Small flakes as well as some larger crystals were detected on the sample surface, with Ag, O, I, and some C co-localized on the flakes, similar to what was observed in Example 2 for Grade 2 Ti. The C may be adsorbed surface carbon.

Different grades of Ti can be coated using this method to generate the same final compound (Ag₅IO₆) on the Ti surface. However, the surface roughness and metal grade may impact the amount of material that is coated onto the surface, and thus its bacteriostatic longevity.

### Example 12. Varying Coating Thickness, Compound ID

Method 2 of Example 2 was used to coat 4 metals, with the following variations (selected based on silver concentrations found in Example 10 and Example 4) described below:
Aluminum Coupons
   1) 5000 ppm solution, 15 min
   2) 5000 ppm solution, 30 min
   3) 5000 ppm solution, 1h
   4) 500 ppm solution, 3h
   5) 1000 ppm solution, 3h
   6) 5000 ppm solution, 3h
Stainless Steel Coupons
   1) 5000 ppm solution, 3h
   2) 5000 ppm solution, 5h
   3) 5000 ppm solution, 7h
   4) 2500 ppm solution, 3h
   5) 4500 ppm solution, 3h
   6) 6500 ppm solution, 3h
Titanium Alloy (Ti-6AI-4V - Grade 5) Rods and Titanium Metal (Grade 2) Implant Pins
   1) 5000 ppm solution, 2h
   2) 5000 ppm solution, 4h
   3) 5000 ppm solution, 6h
   4) 4000 ppm solution, 3h
   5) 5000 ppm solution, 3h
   6) 6000 ppm solution, 3h

AAS was performed as in Example 4. The results are below:

| | **Method** | **Ag/surface area (ug/cm2)** | | **Method** | **Ag/surface area (ug/cm2)** |
|---|---|---|---|---|---|
| **Stainless Steel** | 1 | 19.40 ± 0.91 | **Aluminum** | 1 | 76.91 ± 4.10 |
| | 2 | 55.69 ± 10.01 | | 2 | 121.87 ± 10.60 |
| | 3 | 86.53 ± 41.28 | | 3 | 256.28 ± 13.99 |
| | 4 | 12.69 ± 1.57 | | 4 | 27.53 ± 7.62 |
| | 5 | 11.12 ± 0.85 | | 5 | 73.74 ± 4.78 |
| | 6 | 20.22 ± 3.24 | | 6 | 1216.94 ±65.54 |
| **Ti-6Al-4V** | 1 | 4.60 ± 1.27 | **Titanium Metal** | 1 | 2.14 ± 0.34 |
| | 2 | 6.71 ± 1.51 | | 2 | 5.38 ± 0.72 |
| | 3 | 8.12 ± 1.78 | | 3 | 8.56 ± 1.61 |
| | 4 | 4.83 ± 0.50 | | 4 | 2.74 ± 0.13 |
| | 5 | 5.38 ± 0.97 | | 5 | 3.95 ± 0.94 |
| | 6 | 5.13 ± 0.62 | | 6 | 3.80 ± 0.94 |

The AAS results indicated that varying the coating time (Methods 1-3), resulted in a large variation in coating thickness, while varying the concentration of the starting compound did not generate very significant differences in coating thickness, with the exception of Al, for which Method 6, with the highest starting concentration, substantially increased the coating thickness. For Grade 5 Ti (Ti-6AI-4V) it was more difficult to generate substantially different coating thicknesses than it was for the Al and the stainless steel. In general, the results show that similar coating methods will have similar impacts on coating thicknesses for both grades of Ti.

XRD: XRD was performed as described in Example 7 on each metal with the thickest coating (as determined by the AAS measurements). Ag₅IO₆ was the predominant silver-containing phase detected in all the coated metals. A small amount of metallic silver formation was observed on the coated Al (at a ratio for metallic silver:Ag₅IO₆ of 1:23).

These results indicate that Ag₅IO₆ can be coated onto a number of different metal surfaces, and that varying the coating time is a simple way to vary coating thickness. Varying starting concentration has some impact on coating thickness as well.

### Example 13. Anti-Biofilm Activity

Method 2 of Example 2 was used to coat 4 metals, with the following variations (selected based on Example 12):
Stainless Steel Coupons
   1) 5000 ppm solution, 3h (Method 1 from Example 12, coded A-Low)
   2) 5000 ppm solution, 7h (Method 3 from Example 12, coded A-Hi) Aluminum Coupons
   3) 500 ppm solution, 3h (Method 4 from Example 12, coded B-Low)
   4) 5000 ppm solution, 1h (Method 3 from Example 12, coded B-Med)
   5) 5000 ppm solution, 3h (Method 6 from Example 12, coded B-Hi) Titanium Metal (Grade 2) Rods
   6) 5000 ppm solution, 2h (Method 1 from Example 12, coded C-Low)
   7) 5000 ppm solution, 4h (Method 2 from Example 12, coded C-Med)
   8) 5000 ppm solution, 6h (Method 3 from Example 12, coded C-Hi)
      Titanium Alloy (Ti-6AI-4V - Grade 5) Rods
9) 4000 ppm solution, 3h (Method 4 from Example 12, coded D-Med)

### BEST Assay™:

### Method:

Coated metal samples and control samples were secured onto a BEST Assay™ lid and challenged for the ability of the Ag₅IO₆ coating to prevent formation of biofilms on the metal surfaces, as well as to kill the surrounding planktonic microorganisms. The species tested were S. *aureus* (gram positive bacteria), P. *aeruginosa* (gram negative bacteria), and *C. albicans* (yeast). The challenges were performed for 24h using the BEST Assay™ under the following test conditions:
Test Condition (TC) 1: 30 minute human serum pre-soak
Test Condition (TC) 2: 30 minute 0.9% saline pre-soak
Test Condition (TC) 3: No pre-soak

### Results Summary:

A summary table of the average planktonic log reduction values is provided below which shows the average log reduction values for each strain tested when the test article was compared to the control article for each test condition (1, 2, or 3). An average log reduction value greater than or equal to 4 passes efficacy acceptance criteria. An average log reduction value greater than or equal to 3 is biocidal by standard definition.

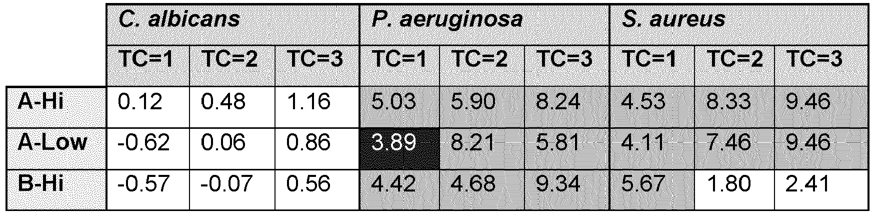

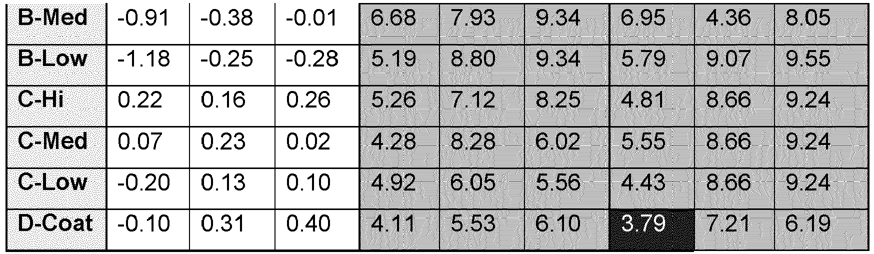

A summary table of the average adhered biomass log reduction values is provided below which shows the average log reduction values for each strain tested when the test article was compared to the control article for each test condition (1, 2, or 3). An average log reduction value greater than or equal to 4 passes efficacy acceptance criteria. An average log reduction value greater than or equal to 3 is biocidal by standard definition.

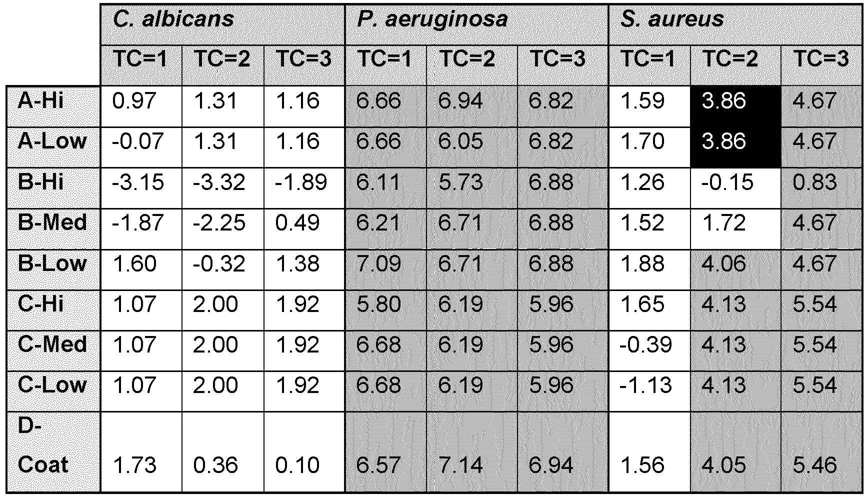

A summary table of the average planktonic log reduction values is provided below which shows the average log reduction values for each strain tested when the test article was compared to the initial inoculum check for each test condition (1, 2, or 3). An average log reduction value greater than or equal to 4 passes efficacy acceptance criteria. An average log reduction value greater than or equal to 3 is biocidal by standard definition.

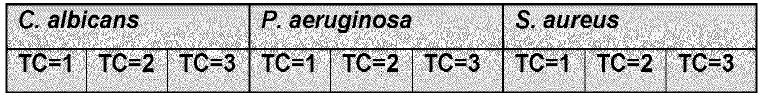

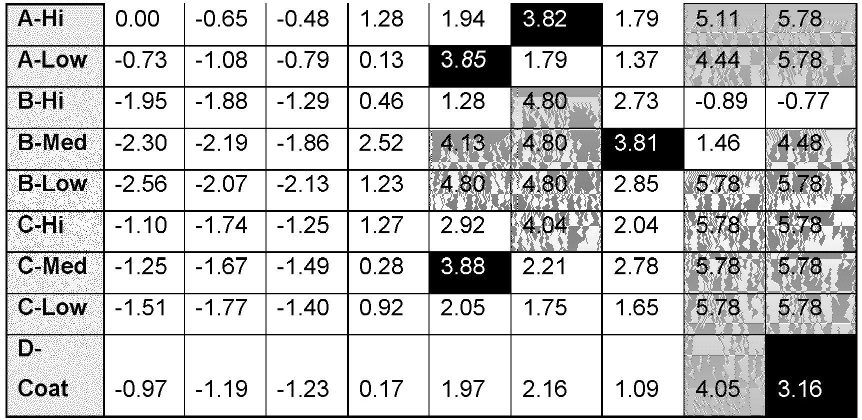

### Discussion/Conclusions/lmplications:

All test coupons performed well against *P. aeruginosa* and *S*. *aureus* (both for the planktonic and adhered biomass measurements), but did not perform as well against the *C*. *albicans* (only the adhered biomass log reductions as compared to the inoculum check showed biocidal activity).

In general, different coating concentrations within a test group performed equally well. The only consistent exception to this was that B-Low (Aluminum with ∼28 µg/cm² Ag) tended to perform better than B-Med (∼256 µg/cm²) or B-Hi (∼1217 µg/cm² Ag), and sometimes B-Med performed better than B-Hi as well. For B-Med and B-Hi, there were visual "holes" that appeared to be uncoated. It is possible that when the coating is made this thick, the crystals grow together and flake off in chunks (i.e. they don't adhere to the surface as well as they do at lower coating thicknesses). The "holes" in the coating could provide surfaces for the bacteria to adhere to. There were a few instances where C-Hi (Titanium with ∼8.6 µg/cm² Ag) performed better than C-Low (∼2 µg/cm² Ag). This may indicate that the coating thickness using Ti Method 1 is a bit low (it was the thinnest coating used in this study).

In general, the different coated metals also had similar activity, with the exception being that for *S*. *aureus,* and *C. albicans,* group B (aluminum) tended to perform worse than the other test groups, while for the *P. aeruginosa,* group B tended to perform better than the other test groups. Since *P. aeruginosa* is the most sensitive to silver, these results may be explained by the fact that although the silver content is the highest in the B group coatings, there was some metallic silver formed on these coatings (see Example 12), which would have a lower activity than ionic forms of silver, particularly against more silver-resistant organisms such as S. *aureus* and *C. albicans.* For these organisms, group A (stainless steel, particularly A-Hi) tended to perform the best. This group had the second highest silver content to the aluminum coupons, with only Ag₅IO₆ detected, which likely explains the higher activity of this group.

In general, using human serum or saline pre-soaks did not greatly hamper the activity of the silver compound relative to the unsoaked trial. When there were significant differences (particularly for S. *aureus),* TC 1 performed worse than the other test conditions, as would be expected, since the proteins and other components of human serum tend to bind silver.

Overall, all four types of metal coated with Ag₅IO₆ were able to prevent biofilm formation and kill the surrounding planktonic microorganisms consistently for S. *aureus* and *P. aeruginosa* and were not substantially hampered by pre-soaking with NaCl. Pre-soaking with human serum had some negative impact on activity, particularly against *S*. *aureus,* which has a higher resistance to silver, but this was not consistent.

### Example 14. Isolation of Ag₅IO₆ powder

### • Isolation Methods Tested:

1) A concentrated sodium diperiodatoargentate solution was made (5000 ppm) and placed in an autoclaved using a liquid cycle (similar to Example 2, Method 3).
2) A concentrated potassium diperiodatoargentate solution (as made) was also autoclaved (similar to Example 2, Method 3).
3) A concentrated sodium diperiodatoargentate solution was made (5000 ppm) and placed unsealed in an oven at 80°C (similar to Example 2, Method 2) and left there until most of the solution had reacted - 96h.
4) A concentrated potassium diperiodatoargentate solution (as made) was also placed unsealed in an oven at 80°C (similar to Example 2, Method 2) and left there until most of the solution had reacted - 96h.

The solid material generated by each of the above methods (brown/black powder) was filtered and air dried in the dark.

**XRD:** XRD was performed similarly to Example 7 for each isolated powder. All the samples collected were quite pure - virtually 100% Ag₅IO₆. However, there was a trace unidentified impurity in the samples prepared from the potassium diperiodatoargentate, whereas there were no impurity phases identified when the sodium diperiodatoargentate was used as the starting compound.

Ag₅IO₆ can be synthesized in powder form by any of the methods described above (and thus could be used in any application where an antimicrobial silver powder might be of value), but the simplest and most effective method appears to be making a concentrated solution of sodium diperiodatoargentate and autoclaving it in a liquid cycle, as this was the shortest method and generated the purest sample.

While the invention has been described in some detail by way of illustration and example, it should be understood that the invention is susceptible to various modifications and alternative forms, and is not restricted to the specific embodiments set forth in the Examples.

## Claims

1. A method of treating a microbial contaminant, exclusive of in vivo human or animal use, comprising contacting a microbe with one or more reaction products derived from a silver iodate or a silver periodate wherein the reaction product is Ag₅IO₆.

2. The method of claim 1 wherein the microbial contaminant is a biofilm.

3. The method of claim 1 wherein the reaction product(s) are in the form of a coating, powder, gel, spray, dipping solution, or lubricant.

4. The method of claim 1 wherein treating a microbial contaminant comprises increasing an antimicrobial characteristic of an article.

5. The method of claim 1, wherein the Ag₅IO₆ is formed by the steps of:
heating a sodium diperiodatoargentate (III) or a potassium diperiodatoargentate (III) in aqueous solution; and
allowing the Ag₅IO₆ to form.

6. The method of claim 5 wherein heating includes with or without elevated pressure.

7. The method of claim 5 wherein heating includes heating up to about 150°C.

8. The method of claim 5, wherein the step of allowing the Ag₅IO₆ to form is performed in the presence of a metal substrate, thereby coating the metal substrate with the one or more reaction products comprising a silver periodate (VII).

9. The method of claim 8 wherein the metal substrate comprises a metal or metal alloy selected from the group consisting of titanium, titanium containing alloys, titanium (grade 2), titanium (grade 5), aluminum, stainless steel, mild steel, and copper.

10. An article of manufacture, said article comprising an antimicrobial compound or compounds comprising one or more reaction products derived from a silver iodate or a silver periodate wherein the reaction product is Ag₅IO₆.

11. The article of claim 10 wherein the article comprises a metal or metal alloy.

12. The article of claim 11 wherein the metal or metal alloy is selected from the group consisting of titanium, titanium containing alloys, titanium (grade 2), titanium (grade 5), aluminum, stainless steel, mild steel, and copper.

13. The article of claim 10 wherein the reaction product is a coating.

14. The article of claim 10 wherein said article is a wound dressing.

## Patentansprüche

1. Verfahren zur Behandlung einer mikrobiellen Verunreinigung, ausgenommen einer in *vivo*-Verwendung am Menschen oder am Tier, umfassend das Inkontaktbringen eines Mikroorganismus mit einem oder mehreren Reaktionsprodukten, die von einem Silberiodat oder einem Silberperiodat stammen, wobei das Reaktionsprodukt Ag₅IO₆ ist.

2. Verfahren nach Anspruch 1, wobei die mikrobielle Verunreinigung ein Biofilm ist.

3. Verfahren nach Anspruch 1, wobei das/die Reaktionsprodukt(e) in Form einer Beschichtung, eines Puders, eines Gels, eines Sprays, einer Tauchlösung oder eines Schmiermittels vorliegen.

4. Verfahren nach Anspruch 1, wobei die Behandlung einer mikrobiellen Verunreinigung das Erhöhen einer antimikrobiellen Eigenschaft eines Artikels umfasst.

5. Verfahren nach Anspruch 1, wobei das Ag₅IO₆ gebildet wird durch die Schritte:
Erhitzen von Natriumdiperiodatargentat (III) oder Kaliumdiperiodatargentat (III) in wässriger Lösung; und
Ermöglichen, dass sich Ag₅IO₆ bildet.

6. Verfahren nach Anspruch 5, wobei das Erhitzen mit oder ohne erhöhtem Druck umfasst.

7. Verfahren nach Anspruch 5, wobei das Erhitzen ein Erhitzen auf bis zu etwa 150°C umfasst.

8. Verfahren nach Anspruch 5, wobei der Schritt des Ermöglichens, dass sich Ag₅IO₆ bildet, in Gegenwart eines Metallsubstrats durchgeführt wird, wodurch das Metallsubstrat mit dem einen oder den mehreren Reaktionsprodukten, umfassend Silberperiodat (VII), beschichtet wird.

9. Verfahren nach Anspruch 8, wobei das Metallsubstrat ein Metall oder eine Metalllegierung umfasst, ausgewählt aus der Gruppe bestehend aus Titan, Legierungen, die Titan enthalten, Titan (Grad 2), Titan (Grad 5), Aluminium, Edelstahl, Baustahl und Kupfer.

10. Fertigungsartikel, wobei der Artikel eine antimikrobielle Verbindung oder Verbindungen umfasst, die ein oder mehrere Reaktionsprodukte umfassen, die von einem Silberiodat oder einem Silberperiodat stammen, wobei das Reaktionsprodukt Ag₅IO₆ ist.

11. Artikel nach Anspruch 10, wobei der Artikel ein Metall oder eine Metalllegierung umfasst.

12. Artikel nach Anspruch 10, wobei das Metall oder die Metalllegierung ausgewählt ist aus der Gruppe bestehend aus Titan, Legierungen, die Titan enthalten, Titan (Grad 2), Titan (Grad 5), Aluminium, Edelstahl, Baustahl und Kupfer.

13. Artikel nach Anspruch 10, wobei das Reaktionsprodukt eine Beschichtung ist.

14. Artikel nach Anspruch 10, wobei der Artikel eine Wundauflage ist.

## Revendications

1. Procédé de traitement d'un contaminant microbien, à l'exclusion d'une utilisation in vivo chez un être humain ou un animal, comprenant la mise en contact d'un microbe avec un ou plusieurs produits de réaction dérivés d'un iodate d'argent ou d'un periodate d'argent dans lequel le produit de réaction est Ag₅IO₆.

2. Procédé selon la revendication 1, dans lequel le contaminant microbien est un biofilm.

3. Procédé selon la revendication 1, dans lequel le(s) produit(s) de réaction se présente(nt) sous la forme d'un revêtement, d'une poudre, d'un gel, d'un aérosol, d'une solution de trempage, ou d'un lubrifiant.

4. Procédé selon la revendication 1, dans lequel le traitement d'un contaminant microbien comprend l'augmentation d'une caractéristique antimicrobienne d'un article.

5. Procédé selon la revendication 1, dans lequel le Ag₅IO₆ est formé par les étapes suivantes :
chauffer un diperiodatoargentate de sodium (III) ou un diperiodatoargentate de potassium (III) en solution aqueuse ; et
laisser le Ag₅IO₆ se former.

6. Procédé selon la revendication 5, dans lequel l'étape consistant à chauffer est mis een oeuvre avec ou sans pression élevée.

7. Procédé selon la revendication 5, dans lequel l'étape consistant à chauffer comporte un chauffage jusqu'à environ 150 °C.

8. Procédé selon la revendication 5, dans lequel l'étape consistant à laisser le Ag₅IO₆ se former est mise en œuvre en présence d'un substrat métallique, d'où il résulte le revêtement du substrat métallique avec lesdits un ou plusieurs produits de réaction comprenant un periodate d'argent (VII).

9. Procédé selon la revendication 8, dans lequel le substrat métallique comprend un métal ou un alliage métallique choisi dans le groupe constitué du titane, d'alliages contenant du titane, du titane (grade 2), du titane (grade 5), de l'aluminium, d'acier inoxydable, d'acier doux, et du cuivre.

10. Article manufacturé, ledit article comprenant un composé ou des composés antimicrobiens comprenant un ou plusieurs produits de réaction dérivés d'un iodate d'argent ou d'un periodate d'argent dans lequel le produit de réaction est Ag₅IO₆.

11. Article selon la revendication 10, dans lequel l'article comprend un métal ou un alliage métallique.

12. Article selon la revendication 11, dans lequel le métal ou l'alliage métallique est choisi dans le groupe constitué du titane, d'alliages contenant du titane, du titane (grade 2), du titane (grade 5), de l'aluminium, d'acier inoxydable, d'acier doux, et du cuivre.

13. Article selon la revendication 10, dans lequel le produit de réaction est un revêtement.

14. Article selon la revendication 10, dans lequel le produit de réaction est un pansement.
